# DEMANDE DE BREVET EUROPEEN

(11) **EP 3 537 595 A1**
(43) Date de publication de la demande: **11.09.2019**
(21) Numéro de dépôt: 18160982.7
(22) Date de dépôt: 09.03.2018
(51) Int. Cl.: H02N 2/10, H02N 2/02, G04C 3/12

(54) **MOTEUR PIEZOÉLECTRIQUE LINÉAIRE À COURSE ALLONGÉE**

(71) Demandeur: ETA SA Manufacture Horlogère Suisse, 2540 Grenchen (CH)
(72) Inventeur: Lagorgette, Pascal, 2502 Bienne (CH); Meyer, Pascal, 2000 Neuchâtel (CH)
(74) Mandataire: ICB SA

(57) **Abrégé**

L'invention se rapporte à un moteur piézoélectrique linéaire comprenant :
- un élément passif (20) de forme allongée,
- un actionneur piézoélectrique comportant un résonateur (30) comprenant une paire de bras (31, 32) connectés à l'une de leurs extrémités au niveau d'une zone de connexion (33), les deux autres extrémités (310, 320) étant dites libres, l'élément passif (20) étant apte à être déplacé linéairement par friction des extrémités libres (310, 320) contre l'élément passif (20),
l'élément passif (20) et le résonateur (30) étant inclinés l'un par rapport à l'autre d'un angle (α) non nul inférieur à 90 degrés;

ou chaque bras (31', 32') comprenant une branche principale (311' ; 321') connectée à l'extrémité libre (310', 320') par une zone de raccord (312', 322'), la zone de raccord (312', 322') étant agencée pour amener les extrémités libres (310', 320') à un niveau différent de celui des branches principales (31, 32).

## Description

### Domaine de l'invention

L'invention se rapporte au domaine technique des moteurs piézoélectriques linéaires.

### Arrière-plan de l'invention

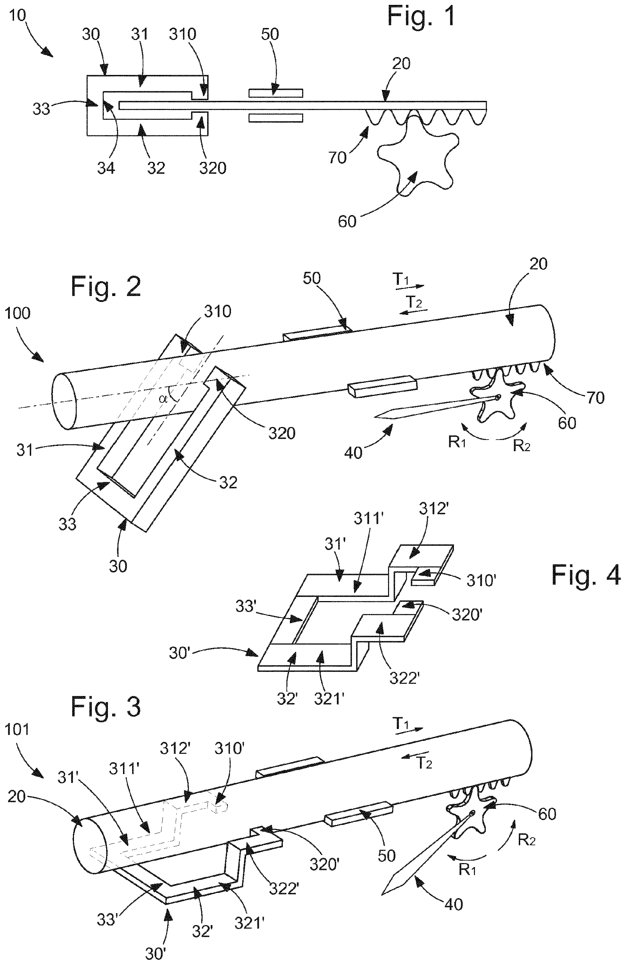

Un moteur piézoélectrique linéaire comporte classiquement un élément passif et un actionneur permettant de déplacer linéairement l'élément passif en utilisant l'effet piézoélectrique. En référence à la figure 1, on connait en particulier les moteurs piézoélectriques 10 linéaires pour lesquels l'élément passif est un élément allongé 20 (par exemple une barre à section rectangulaire) et l'actionneur piézoélectrique comporte un résonateur 30 formé d'une paire de bras 31, 32 connectés l'un à l'autre au niveau d'une zone de connexion 33, sensiblement en forme de diapason ou de U. L'actionneur comporte en outre deux éléments piézoélectriques (non représentés), chacun attaché à l'un des bras 31, 32, et jouant le rôle de moyens d'excitation des bras pour leur imposer des vibrations. D'autre part, l'élément passif 20 s'étend sensiblement parallèlement aux bras 31, 32 du résonateur 30, son guidage axial étant assuré par des moyens de guidage 50 se trouvant à distance du résonateur. L'élément passif 20 est également en contact local avec les extrémités libres 310, 320 des bras 31, 32 du résonateur 30, de sorte que l'élément passif 20 soit déplacé axialement par friction des extrémités libres 310, 320 des bras 31, 32 sur la région de contact.

Dans des applications où il est important de réduire l'encombrement du moteur piézoélectrique, en particulier dans le domaine horloger, les bras 31, 32 du résonateur 30 doivent être de faible longueur, ce qui limite la course linéaire maximale de l'élément passif 20. La translation axiale de l'élément passif 20 dans le sens de la zone de connexion 33 est limitée par la présence de ladite zone de connexion 33 qui fait office de butée, et son déplacement axial dans l'autre sens est limitée par la longueur des bras 31, 32. Cette course limitée est problématique dans certaines situations, notamment si l'élément passif 20 engrène avec une roue 60, par exemple par l'intermédiaire d'un système à crémaillère 70, car la rotation de la roue 60 est alors restreinte. A titre d'exemple, si la course de l'élément passif 20 est limitée à environ 1 millimètre, alors le diamètre de la roue 60 doit être au maximum d'environ 0.3 millimètre pour que ladite roue 60 puisse effectuer un tour complet lors de la course. Cette dimension est trop faible pour être réalisable techniquement.

Une course linéaire de l'élément passif de 3 millimètres au minimum est nécessaire pour que le pignon soit réalisable techniquement : avec une telle course, le diamètre du pignon doit être d'environ 1 millimètre pour effectuer une rotation complète.

### Résumé de l'invention

Le but de la présente invention est donc d'augmenter la course linéaire maximale de l'élément passif.

A cet effet, selon un premier aspect, l'invention se rapporte à un moteur piézoélectrique linéaire comprenant :
- un élément passif de forme allongée,
- un actionneur piézoélectrique comportant un résonateur comprenant une paire de bras connectés à l'une de leurs extrémités au niveau d'une zone de connexion, les deux autres extrémités étant dites libres,
l'élément passif et le résonateur étant inclinés l'un par rapport à l'autre d'un angle non nul inférieur à 90 degrés, l'élément passif étant apte à être déplacé linéairement par friction des extrémités libres contre l'élément passif.

Incliner l'élément passif par rapport au résonateur permet d'éviter que le déplacement axial de l'élément passif ne soit bloqué en butée par la partie de connexion entre les bras. Naturellement, l'angle d'inclinaison doit être suffisamment élevé pour éviter que l'élément passif ne puisse buter sur la zone d'intersection des bras du résonateur.

Dans un mode de réalisation préféré, l'angle d'inclinaison est compris entre 5 et 25 degrés.

Un angle d'inclinaison faible est privilégié car plus l'angle est grand, plus l'encombrement total est faible, et plus les pertes de rendement à l'interface entre l'élément passif et le résonateur sont grandes.

Selon un deuxième aspect, l'invention se rapporte à un moteur piézoélectrique linéaire comprenant :
- un élément passif de forme allongée,
- un actionneur piézoélectrique comportant un résonateur comprenant une paire de bras connectés à l'une de leurs extrémités au niveau d'une zone de connexion, les deux autres extrémités étant dites libres, l'élément passif étant apte à être déplacé linéairement par friction des extrémités libres contre l'élément passif,
chaque bras comprenant une branche principale connectée à l'extrémité libre par une zone de raccord, la zone de raccord étant agencée pour amener les extrémités libres à un niveau différent de celui des branches principales.

Ainsi, le résonateur se trouve principalement sur deux niveaux : au premier niveau se trouvent les branches principales, au deuxième niveau se trouvent les extrémités libres, et la zone de raccord sert à connecter les deux niveaux. Ainsi, l'élément passif est surélevé par rapport aux branches principales, réduisant voire supprimant (en fonction de l'inclinaison donnée à l'élément passif) les risques que l'élément passif vienne buter contre la zone de connexion des bras.

Dans un mode de réalisation, l'élément passif s'étend sensiblement parallèlement aux branches principales.

Ce mode de réalisation est avantageux par rapport au premier aspect de l'invention en ce que les pertes de rendement à l'interface entre l'élément passif et le résonateur sont plus faibles, car il n'y a pas d'inclinaison entre les extrémités libres et l'élément passif.

L'invention se rapporte également à une pièce d'horlogerie comportant un moteur piézoélectrique tel que détaillé ci-dessus.

Dans un mode de réalisation non limitatif, la pièce d'horlogerie comporte un pignon engrenant avec une denture de l'élément passif, le pignon étant solidaire en rotation d'une aiguille de la pièce d'horlogerie.

### Description sommaire des dessins

D'autres particularités et avantages ressortiront clairement de la description qui en est faite ci-après, à titre indicatif et nullement limitatif, en référence aux dessins annexés, dans lesquels :
- la figure 1, déjà décrite, représente schématiquement un moteur piézoélectrique rotatif selon l'art antérieur,
- la figure 2 représente schématiquement un moteur piézoélectrique linéaire selon un premier mode de réalisation de l'invention,
- la figure 3 représente schématiquement un moteur piézoélectrique linéaire selon un deuxième mode de réalisation de l'invention,
- la figure 4 représente schématiquement l'actionneur piézoélectrique du moteur piézoélectrique de la figure 3.

### Description détaillée des modes de réalisation préférés

La figure 2 montre un dispositif de rotation 100 d'une roue 60, ledit dispositif comprenant un moteur piézoélectrique selon un premier mode de réalisation de l'invention, et la figure 3 montre un dispositif de rotation 101 de ladite roue 60 comprenant un moteur piézoélectrique selon un deuxième mode de réalisation de l'invention. Dans les deux cas, le moteur piézoélectrique comprend un élément passif 20 de forme allongée, et un actionneur piézoélectrique permettant de mettre en translation (c'est-à-dire déplacer linéairement/axialement) l'élément passif 20 en utilisant l'effet piézoélectrique. On note que l'élément passif 20 a été représenté sous la forme d'un cylindre sur les figures 2 et 3, mais il pourrait tout à fait avoir un autre profil (par exemple rectangulaire). Le dispositif de rotation 100, 101 comporte également des moyens de guidage 50 axial de l'élément passif 20, permettant de maintenir son orientation lors de sa translation. Les moyens de guidage 50 sont placés à distance de l'actionneur piézoélectrique. Il s'agit par exemple d'un rail. De plus, le dispositif de rotation 100, 101 comporte des dents 70 disposées à une extrémité de l'élément passif 20 et engrenant avec la denture de la roue 60. Une rotation de la roue 60 dans un premier sens de rotation R1 est possible par l'intermédiaire des dents 70 lorsque l'élément passif 20 est translaté dans un premier sens de déplacement T1. Une rotation de la roue 60 dans un deuxième sens de rotation R2 opposé au premier sens de rotation R1 est possible par l'intermédiaire des dents 70 lorsque l'élément passif 20 est translaté dans un deuxième sens de déplacement T2 opposé au premier sens de déplacement T1.

Dans le premier mode de réalisation illustré à la figure 2, l'actionneur piézoélectrique comporte des moyens d'excitation piézoélectrique, non représentés, et un résonateur 30 comprenant deux bras 31, 32 aptes à osciller. Les moyens d'excitation sont avantageusement constitués de deux parties, chacune attachée à un bras différent. Toutefois, d'autres modes de réalisation des moyens d'excitation sont possibles, ils peuvent par exemple être constitués d'une seule partie disposés au niveau d'une jointure entre les bras. Lors de l'application d'une tension adaptée aux moyens d'excitation, les moyens d'excitation se déforment, et des contraintes mécaniques sont transmises aux bras 31, 32 qui se mettent alors à osciller. Par une conception et un montage appropriés des moyens d'excitation sur les bras, des oscillations multidimensionnelles de forme souhaitée peuvent être réalisées.

Les bras 31, 32 sont connectés au niveau d'une zone de connexion 33, et s'étendent sensiblement parallèlement l'un à l'autre depuis ladite zone de connexion 33. Le résonateur 30 a donc globalement une forme de diapason, c'est-à-dire une forme de U. Toutefois, cette forme n'est pas limitative. Les extrémités des bras non connectées à la zone de connexion 33, sont dites extrémités libres 310, 320. L'amplitude des oscillations des bras 31, 32 est maximale à ces extrémités 310, 320. L'élément passif 20 passe entre les extrémités libres 310, 320 desdits bras 31, 32. Les oscillations multidimensionnelles des extrémités libres 310, 320 des bras 31, 32 permettent donc d'imposer une translation axiale à l'élément passif 20, par frottement desdites extrémités 310, 320 contre l'élément passif 20.

Toutefois, l'élément passif ne s'étend pas parallèlement aux bras 31, 32. L'axe de l'élément passif 20 s'étend par rapport au plan comprenant les axes des bras 31, 32 avec un angle d'inclinaison a non nul et inférieur à 90 degrés. Plus l'angle est grand, plus le moteur piézoélectrique est encombrant et plus les pertes de rendement à l'interface résonateur/élément passif sont grandes. Il importe donc de limiter l'angle d'inclinaison α. Toutefois, l'angle d'inclinaison α doit être suffisamment grand, c'est-à-dire le résonateur 30 doit être suffisamment incliné par rapport à l'élément passif 20, pour que la course de l'élément passif 20 ne soit pas gênée par la zone de connexion 33.

Dans le deuxième mode de réalisation illustré à la figure 3, l'actionneur piézoélectrique comporte un résonateur 30' de forme différente de celle du résonateur 30 du premier mode de réalisation. Le résonateur 30' comprend deux bras 31', 32'. Lesdits bras 31', 32' sont connectés au niveau d'une zone de connexion 33'. Chaque bras 31', 32' comprend une branche principale 311', 321', une extrémité libre 310', 320', et une zone de raccord 312', 322' permettant de connecter la branche principale 311', 321' et l'extrémité libre 310', 320'.

Les branches principales 311', 321' s'étendent sensiblement parallèlement l'une à l'autre depuis ladite zone de connexion 33'. La zone de connexion 33' et les deux branches principales 311', 321' sont au même niveau, c'est-à-dire les axes de la zone de connexion 33' et les axes des deux branches principales 311', 321' sont compris dans un même plan.

Les extrémités libres 310', 320' s'étendent au contraire à un niveau différent, et le plan contenant les axes des extrémités libres 310', 320' est parallèle au plan des branches principales 311', 321' mentionné au paragraphe précédent. Dans le mode de réalisation représenté à la figure 3, les zones de raccord 312', 322' comprennent chacune une portion s'étendant orthogonalement aux branches principales 311', 321' de sorte à amener les extrémités libres 310', 320' à un niveau différent de celui des branches principales 311', 321'. Toutefois, les zones de raccord 312', 322' pourraient tout à fait être d'une autre forme, l'important étant que le résonateur comprenne deux étages.

Les extrémités libres 310', 320' s'étendent en direction l'une de l'autre et en vis-à-vis l'une de l'autre, et l'élément passif 20 passe entre lesdites extrémités libres 310', 320' parallèlement aux branches principales 311', 321'. L'actionneur piézoélectrique comporte des moyens d'excitation piézoélectrique, non représentés. Les moyens d'excitation sont avantageusement constitués de deux parties, chacune attachée à une des extrémités libres 310', 320'. Lors de l'application d'une tension adaptée aux moyens d'excitation, les moyens d'excitation se déforment, et des contraintes mécaniques sont transmises aux extrémités libres 310', 320' qui se mettent alors à osciller. Par une conception et un montage appropriés des moyens d'excitation sur les bras, des oscillations multidimensionnelles de forme souhaitée peuvent être réalisées. Les oscillations multidimensionnelles des extrémités libres 310', 320' des bras 31', 32' permettent d'imposer une translation axiale à l'élément passif 20, par frottement desdites extrémités 310', 320' contre l'élément passif 20.

Un tel résonateur à deux niveaux permet d'éviter que la course de l'élément passif 20 ne soit gênée par la zone de connexion 33. On remarque que dans le deuxième mode de réalisation, il n'est pas nécessaire que l'élément passif 20 s'étende parallèlement aux branches principales 311', 321', il pourrait être légèrement incliné par rapport au plan contenant les axes des branches principales 311', 321'. Toutefois, le rendement à l'interface résonateur/élément passif serait alors moins élevé. De plus, avec une inclinaison trop forte, l'élément passif 20 pourrait buter dans la zone de connexion 33'.

On note qu'un avantage du deuxième mode de réalisation par rapport au premier mode de réalisation est que les pertes de rendement à l'interface résonateur/élément passif sont faibles car les extrémités libres ne sont pas inclinées par rapport à l'élément passif. En revanche, la fabrication du résonateur du premier mode de réalisation est plus simple que celle du résonateur du deuxième mode de réalisation.

Le dispositif de rotation 100, 101 selon l'un des modes de réalisation de l'invention peut tout à fait être intégré à une pièce d'horlogerie de type montre-bracelet, notamment une pièce d'horlogerie comprenant une aiguille 40 coaxiale avec et solidaire en rotation de la roue 60. Toutefois, le dispositif de rotation selon un des modes de réalisation de l'invention pourrait être utilisé pour entrainer en rotation non pas une aiguille, mais un disque (par exemple un disque des quantièmes ou un disque de phase de lune), une roue ou encore un anneau.

On comprend que l'invention se rapporte également à un procédé d'actionnement de l'aiguille (ou du disque, roue, anneau, etc.) de la pièce d'horlogerie décrite au paragraphe précédent, le procédé comprenant les étapes suivantes :
- translater l'élément passif du moteur piézoélectrique dans une première direction de sorte à provoquer une rotation complète du pignon et par conséquent de l'aiguille,
- translater l'élément passif dans une deuxième direction opposée à la première direction, à une vitesse suffisamment rapide pour que son mouvement ne soit pas détecté par l'oeil.

On comprendra que diverses modifications et/ou améliorations et/ou combinaisons évidentes pour l'homme du métier peuvent être apportées aux différentes formes d'exécution de l'invention exposée ci-dessus sans sortir du cadre de l'invention définie par les revendications annexées.

## Revendications

1. Moteur piézoélectrique linéaire comprenant :
- un élément passif (20) de forme allongée,
- un actionneur piézoélectrique comportant un résonateur (30) comprenant une paire de bras (31, 32) connectés à l'une de leurs extrémités au niveau d'une zone de connexion (33), les deux autres extrémités (310, 320) étant dites libres, l'élément passif (20) étant apte à être déplacé linéairement par friction des extrémités libres (310, 320) contre l'élément passif (20),
l'élément passif (20) et le résonateur (30) étant inclinés l'un par rapport à l'autre d'un angle (α) non nul inférieur à 90 degrés.

2. Moteur piézoélectrique selon la revendication précédente, dans lequel l'angle d'inclinaison est compris entre 5 et 25 degrés.

3. Moteur piézoélectrique linéaire comprenant :
- un élément passif (20) de forme allongée,
- un actionneur piézoélectrique comportant un résonateur (30') comprenant une paire de bras (31', 32') connectés à l'une de leurs extrémités au niveau d'une zone de connexion (33'), les deux autres extrémités (310', 320') étant dites libres, l'élément passif (20) étant apte à être déplacé linéairement par friction des extrémités libres (310', 320') contre l'élément passif (20),
chaque bras (31', 32') comprenant une branche principale (311'; 321') connectée à l'extrémité libre (310', 320') par une zone de raccord (312', 322'), la zone de raccord (312', 322') étant agencée pour amener les extrémités libres (310', 320') à un niveau différent de celui des branches principales (31, 32).

4. Moteur piézoélectrique (10) selon la revendication 3, dans lequel l'élément passif (20) s'étend sensiblement parallèlement aux branches principales (310).

5. Pièce d'horlogerie comportant un moteur piézoélectrique (10) selon l'une des revendications précédentes.

6. Pièce d'horlogerie selon la revendication précédente, comportant un pignon engrenant avec une denture de l'élément passif, le pignon étant solidaire en rotation d'une aiguille de la pièce d'horlogerie.
